(19) Europäisches Patentamt
European Patent Office
Office européen des brevets

(11) **EP 4 096 993 B1**

(12) **EUROPÄISCHE PATENTSCHRIFT**

(45) Veröffentlichungstag und Bekanntmachung des Hinweises auf die Patenterteilung:
**15.04.2026   Patentblatt 2026/16**

(21) Anmeldenummer: **21701109.7**

(22) Anmeldetag: **19.01.2021**

(51) Internationale Patentklassifikation (IPC):
*B62J 27/00* (2020.01)    *B62J 45/414* (2020.01)
*B62J 45/415* (2020.01)    *B62K 3/02* (2006.01)
*B62M 6/50* (2010.01)    *B62J 50/20* (2020.01)
*B60R 21/0132* (2006.01)

(52) Gemeinsame Patentklassifikation (CPC):
**B62J 45/414; B60R 21/0132; B60R 21/0133; B62J 27/00; B62J 45/4151; B62J 45/4152; B62J 50/20; B62M 6/50;** B60R 2021/0088

(86) Internationale Anmeldenummer:
**PCT/EP2021/051027**

(87) Internationale Veröffentlichungsnummer:
**WO 2021/151722 (05.08.2021 Gazette 2021/31)**

(54) **VERFAHREN UND VORRICHTUNG ZUR KLASSIFIZIERUNG EINES UNFALLVORGANGS MIT EINEM ZWEIRAD**

METHOD AND DEVICE FOR CLASSIFYING AN ACCIDENT INVOLVING A TWO-WHEELER

MÉTHODE ET DISPOSITIF DE CLASSIFICATION D'UN ACCIDENT IMPLIQUANT UN VÉHICULE À DEUX ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **31.01.2020   DE 102020201224**

(43) Veröffentlichungstag der Anmeldung:
**07.12.2022   Patentblatt 2022/49**

(73) Patentinhaber: **Robert Bosch GmbH**
**70442 Stuttgart (DE)**

(72) Erfinder:
• **STEGMAIER, Juergen**
**72827 Wannweil (DE)**
• **SCHNEE, Jan**
**71093 Weil Im Schoenbuch (DE)**

(56) Entgegenhaltungen:
EP-A1- 2 632 772          EP-A1- 3 508 405
DE-A1- 102008 003 767    DE-A1- 102012 203 640
DE-A1- 102018 100 191    DE-T2- 60 209 971
US-A1- 2002 039 951

**Beschreibung**

Die Erfindung betrifft ein Verfahren und eine Vorrichtung zur Klassifizierung beziehungsweise Plausibilisierung eines Unfallvorgang mit einem Zweirad, insbesondere eines Unfalls mit einem Elektrofahrrad.

Stand der Technik

Mittels einer Reihe von Sensoren, die an einem Zweirad, zum Beispiel einem Fahrrad und insbesondere an einem Elektrofahrrad, befestigt sind, können sowohl der Betrieb des Zweirads als auch der Fahrzustand überwacht werden. So können Geschwindigkeitssensoren die Radgeschwindigkeit und daraus abgeleitet die Zweiradgeschwindigkeit erfasst werden. Weiterhin können Neigungssensoren oder auch Beschleunigungs- beziehungsweise Drehratensensoren die Verkippung oder Neigung auf der Fahrbahn und Sensoren an der Tretkurbel eines Fahrrads die Fahrtätigkeit erfassen.

Aus der Auswertung dieser erfassten Sensorgrößen können kritische Situationen oder sogar Unfälle erkannt werden, beispielsweise indem das zeitliche Verhalten dieser Sensorgrößen überwacht werden. Diese erkannten kritischen Situationen oder auch Unfälle können dazu genutzt werden, automatisch Hilfe anzufordern oder zumindest eine Information an Dritte weiterzugeben.

Das Dokument EP 2 632 772 A1 offenbart die Merkmale der Präambel des Anspruchs 1.

Die Aufgabe der vorliegenden Erfindung besteht dabei darin, einen Unfall zu klassifizieren, so dass ein Unfallereignis in Form einer kritischen Situationen von einem Umfallen des Rades ohne direkte Kollision unterschieden werden kann.

Offenbarung der Erfindung

Die vorliegende Erfindung betrifft ein Verfahren zur Klassifizierung eines Unfallvorgang eines Zweirads, insbesondere eines Fahrrads. Dabei kann das erfindungsgemäße Verfahren in einer Vorrichtung mit einer Auswerteinheit als Algorithmus ablaufen, um dem Fahrer oder einem Dritten mittels einer entsprechenden erzeugten und/oder ausgesandten Information eine Kollision oder ein Umfalles des Zweirads anzuzeigen. Die Vorrichtung kann dabei beim einem Zweirad, wie einem Fahrrad oder insbesondere bei einem Elektrofahrrad eingesetzt werden. Selbstverständlich ist der Einsatz jedoch auch bei einem Motorrad oder einem anderen einspurigen Fahrzeug möglich.

Zur Klassifizierung eines Unfallvorgangs des Zweirads oder eines entsprechenden einspurigen Fahrzeugs wird die Beschleunigung des Zweirads in der Bewegungsebene des Zweirads erfasst. Optional kann jedoch auch zusätzlich die Bewegung in Richtung der Hochebene erfasst werden. Zur Erfassung der Beschleunigung in der Bewegungsebene können beispielsweise zwei Beschleunigungsrichtungen erfasst werden, die orthogonal aufeinander stehen. Diese Erfassung kann permanent erfolgen, so dass ständig neue Sensorgrößen zur Verfügung stehen oder zeitlich gesteuert in einem vorgebbaren Zeitrahmen oder zu vorgegebenen Zeitpunkten. Optional kann stattdessen auch eine Steuerung der Erfassung aufgrund von vorgegebenen oder besonders erkannten Betriebssituationen erfolgen. Anschließend wird eine erste Integrationsgröße in Abhängigkeit der zeitlichen Integration einer ersten Sensorgröße gebildet oder erzeugt, die beispielsweise die Beschleunigung in Längsrichtung oder Fahrtrichtung des Zweirads repräsentiert. Entsprechend wird eine zweite Integrationsgröße in Abhängigkeit von einer zweiten Sensorgröße gebildet oder erzeugt, die beispielsweise die Beschleunigung in Querrichtung zur Längsrichtung oder Fahrtrichtung des Zweirads repräsentiert. Der Kern der Erfindung besteht dabei darin, einen Unfall, der beispielsweise durch ein weiteres Verfahren erkannt wird, dahingehend zu klassifizieren, inwieweit es sich um einen gravierenden Unfall handelt oder nur um einen verhältnismäßig unproblematischen Sturz des Zweirads ohne zu erwarten Personenschaden des Zweiradfahrers. Hierzu wird die Klassifikation und somit die Erkennung eines gravierenden Unfalls in Abhängigkeit der ersten und zweiten Integrationsgröße durchgeführt.

Die Durchführung der Klassifikation kann dabei durch einen Vergleich der ersten und/oder zweiten Integrationsgröße mit wenigstens jeweils einem gemeinsamen oder jeweils einzeln zugeordneten Schwellenwert erfolgen. Alternativ oder zusätzlich kann auch vorgesehen sein, das Ergebnis der Klassifikation von einem direkten Vergleich der beiden Integrationsgrößen abhängig zu machen.

Das erfindungsgemäße Verfahren kann dabei eine Kollision und somit einen Unfall mit vermutetem Personenschaden erkennen, wenn die erste Integrationsgröße, die beispielsweise die Beschleunigung in der Längsrichtung des Zweirads repräsentiert, bzw. deren Betrag, einen ersten Schwellenwert übersteigt. Optional oder zusätzlich kann eine Kollision auch erkannt werden, falls die erste Integrationsgröße oder deren Betrag größer als die zweite Integrationsgröße ist, insbesondere um ein Vielfaches. In diesem Fall könnte beispielsweise angezeigt werden, dass die (negative) Beschleunigung oder auch die Abbremsung in Längsrichtung abrupt und deutlich größer als das Umkippen des Zweirads zur Seite ist. Wird dabei eine Kollision erkannt, kann das Verfahren eine Information erzeugen, die an den Fahrer oder an eine externe Stelle weitergeleitet wird, um Hilfe herbei zu rufen.

Das erfindungsgemäße Verfahren kann jedoch auch eine Unfallsituation erkennen, in der kein Personenschaden zu erwarten ist, beispielsweise bei einem Vorgang, bei dem das Zweirad nur zu Seite umkippt. Hierzu prüft das Verfahren während der Klassifikation, ob die zweite Integrationsgröße oder deren Betrag einen zweiten Schwellenwert übersteigt. Optional oder zusätzlich kann das Verfahren hierzu prüfen, ob die zweite Integrationsgröße größer als die erste Integrationsgröße ist, insbesondere um ein Vielfaches. Ein derartiges Verhalten würde implizieren, das das Zweirad eine seitliche Umkippbewegung vollführt und sich nicht im Wesentlichen nach vorne bewegt oder in Längsrichtung abgebremst wird.

Erfindungsgemäß erfasst das Verfahren auch den Rollwinkel und den Nickwinkel des Zweirads beziehungsweise dessen zeitliche Veränderung im Sinne einer Drahrate. Aus den so erfassten Rollwinkeln beziehungsweise Nickwinkeln oder den zugehörigen Drehraten lässt sich ebenfalls eine Klassifikation der Bewegung des Zweirads ableiten.

In einer Weiterbildung der Erfindung wird aus den ersten und zweiten Integrationsgrößen eine massenspezifische Energiegröße ableiten, die ebenfalls zur Klassifikation herangezogen werden kann. Hierzu wird zusätzlich aus dem Rollwinkel und dem Nickwinkel eine gemeinsame Kippgröße abgeleitet, die ebenfalls in die Klassifikation einfließt. Zur Erkennung einer Kollision wird dabei geprüft, inwieweit die Energiegröße einen Energieschwellenwert und die Kippgröße einen Kippschwellenwert übersteigt. Wird zunächst der Energieschwellenwert überschritten und anschließend der Kippgrößenschwellenwerte überschritten, erzeugt das Verfahren eine Information, wonach es zu einer Kollision mit vermutlichem Personenschaden gekommen ist. Bleiben jedoch sowohl der Energiewert als auch die Kippgröße unterhalb der entsprechenden Schwellenwerte, erzeugt das Verfahren eine Information, die lediglich ein insbesondere seitliches Umfallen des Zweirads, oder ein sogar noch aufrechtes Fahrrad, repräsentiert. Zur Unterscheidung einer seitlichen Kollision kann ein weiterer Kippschwellenwert hinzugezogen werden. Typische Größen für ein aufrechtes Fahrrad liegen im Bereich der Kippgröße von 0-45°.

Optional kann vorgesehen sein, dass basierend auf einem Energiewert, welcher oberhalb eines entsprechenden Schwellwerts liegt und einer Kippgröße, welche unterhalb eines entsprechenden Schwellwerts liegt, das Verfahren eine Information erzeugt, welche eine Kollision des Zweirads repräsentiert.

Erfindungsgemäß wird vorgesehen, den Energieschwellenwert zur Erkennung einer Kollision in Abhängigkeit der Kippgröße, des Rollwinkels und/oder des Nickwinkel, insbesondere deren Absolutwerte, zu modulieren. Hierbei kann vorgesehen sein, dass der Energieschwellenwert bei kleinen Werten der Kippgröße, des Rollwinkels und/oder des Nickwinkel niedrig gewählt wird und bei steigenden Werten der Kippgröße, des Rollwinkels und/oder des Nickwinkel zunächst langsam und dann beispielsweise exponentiell oder quadratisch ansteigt. Eine Kollision wird dabei erkannt, wenn dieser Energieschwellenwert überschritten wird. Alternativ kann vorgesehen sein, dass ein Energieschwellenwert zur Erkennung eines Aufpralls verwendet wird, der zunächst bei kleinen Werten, der Kippgröße, des Rollwinkels und/oder des Nickwinkel hoch angesetzt wird und bei steigenden Werten der Kippgröße, des Rollwinkels und/oder des Nickwinkel zunächst langsam und dann ebenfalls exponentiell oder quadratisch abfällt.

Weitere Vorteile ergeben sich aus der nachfolgenden Beschreibung von Ausführungsbeispielen bzw. aus den abhängigen Patentansprüchen.

Kurze Beschreibung der Zeichnungen

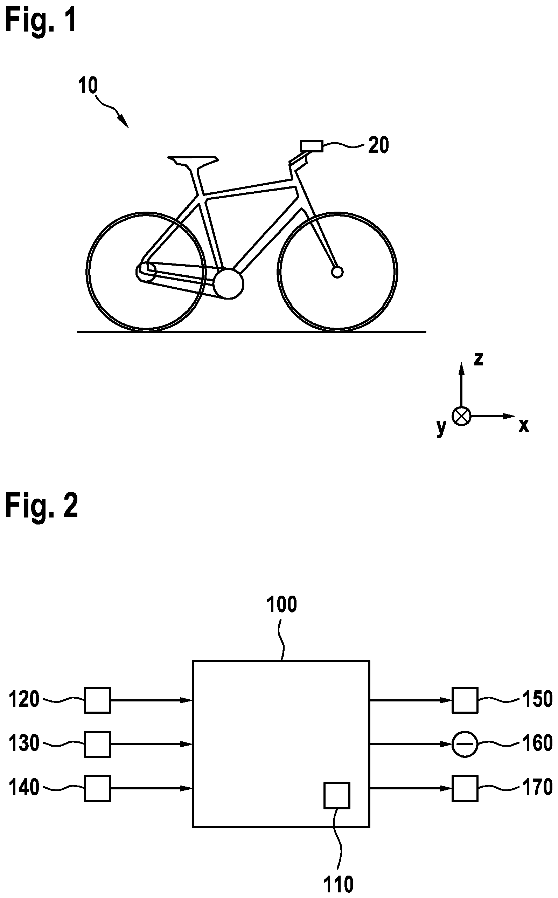

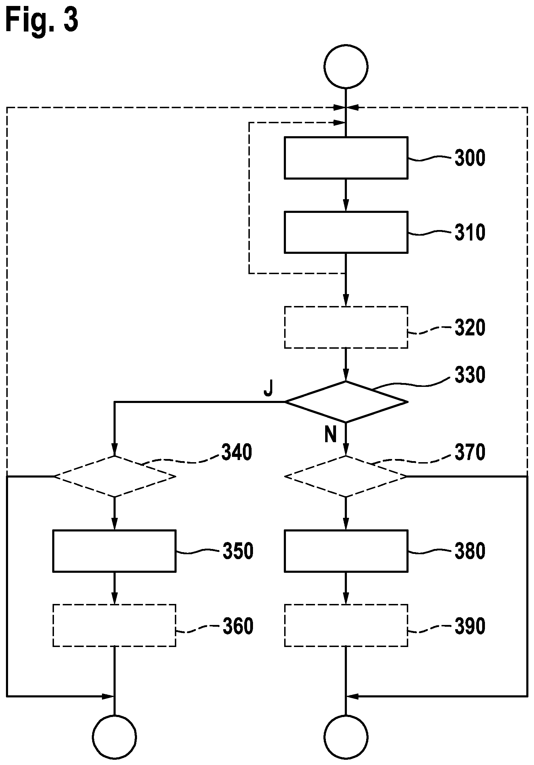

Figur 1 zeigt schematisch ein Zweirad mit einem mobilen Endgerät sowie ein Koordinatensystem, in welchem sich das Zweirad bei einer normalen Fahrtätigkeit bewegt. Das Blockschaltbild der Figur 2 zeigt eine mögliche Realisierung einer erfindungsgemäßen Vorrichtung. Das Flussdiagramm der Figur 3 beschreibt ein mögliches Ausführungsbeispiele des erfindungsgemäßen Verfahren.

Ausführungsformen der Erfindung

Zur Beschreibung der Erfindung wird von einem Zweirad in Form eines Fahrrads 10 ausgegangen, wobei auch andere einspurige Fahrzeuge wie Elektrofahrräder, Motorräder, eScooter, Roller oder auch Kraftwägen mit dieser Erfindung ausgestattet sein könnte. Im vorliegenden Fall des Fahrrads 10 ist vorgesehen, dass ein Smartphone 20 als mobiles Endgerät vorgesehen ist, welches am Lenker des Fahrrads 10 angebracht ist und für die Erfassung und die Verarbeitung von Sensordaten eingerichtet ist. Das Smartphone 20 dient hierbei beispielsweise als Navigationsinstrument, als Anzeige von fahrdynamischen Parameter und/oder zur Steuerung des Antriebs des Fahrrads 10. Zur Durchführung des erfindungsgemäßen Verfahrens greift das Smartphone 20 auf die Sensorgrößen zurück, die durch die im Smartphone 20 zur Verfügung stehenden Sensoren bereit gestellt werden. Alternativ oder optional zusätzlich kann das Smartphone 20 auch auf Sensoren zugreifen, die am Fahrrad 10 angebracht sind. Denkbar wären hier beispielsweise Beschleunigungssensoren an einem der Räder und/oder dem Rahmen sowie Winkelsensoren und Drehratensensoren. Das Fahrrad bewegt sich üblicherweise im Wesentlichen auf der Fahrbahn in der Bewegungsebene xy in Längsrichtung x vorwärts. Durch Abbiege- und Kurvenfahrten wird die Bewegungsebene xy durch eine zusätzliche seitliche Querrichtung y aufgespannt. Eine Bewegung in Richtung der Hochachse z findet beispielsweise im Rahmen von Anstiegen und Bergabfahrten statt. Weitere Bewegungen, die sich in Richtung der Hochachse auswirken können, werden durch Rotationen in Richtung der x-Achse oder durch unebene Fahrbahnen erzeugt. Alle diese Bewegungen in Richtung der z-Achse lassen sich durch charakteristische Größenordnungen der Veränderungsgeschwindigkeit, d.h. der dz/dt, voneinander unterscheiden. So ist beispielsweise das Befahren eines Anstiegs oder einer Bergabfahrt mit einer längeren Zeitkonstanten verbunden als das seitliche Umkippen des Fahrrads im Wesentlichen entlang der x-Achse. Fahrbahnunebenheiten zeichnen sich dagegen durch sehr kleine Bewegungen in z-Richtung innerhalb kurzer Zeit aus.

Die Sensoren innerhalb des Smartphones 20 sind auf ihr eigenes Koordinatensystem ausgerichtet. Durch die Anbringung des Smartphones am Lenker ist daher eine Neukalibrierung hinsichtlich der Ausrichtung in das durch die Bewegung festgelegte Koordinatensystem notwendig. So können die ortsaufgelösten Sensorgrößen des Drehratensensors beziehungsweise des Beschleunigungssensors im Smartphone dazu genutzt werden, während der normalen Fahrtätigkeit dieses definierte Koordinatensystem zu erfassen. Eine Möglichkeit, diese Kalibrierung durchzuführen, um die Sensorgrößen auf die Bewegungsebene xy des Fahrrads auszurichten ist beispielsweise die Methode der Eulerwinkelabschätzung.

In der Figur 2 ist schematisch eine erfindungsgemäße Vorrichtung dargestellt, die das erfindungsgemäße Verfahren ausführt. Hierbei kann vorgesehen sein, dass die Vorrichtung eine Auswerteinheit 100 mit einem Speicher 110 aufweist, während die Sensoren 120, 130 und 140 separat ausgestaltet sind, so dass die entsprechenden Sensorgrößen durch die Auswerteinheit 100 eingelesen werden können. Optional kann jedoch auch vorgesehen sein, dass die Vorrichtung neben der Auswerteinheit 100 und dem Speicher 110 auch einen oder mehrere Sensoren aufweist und somit wenigstens einen Teil der für das erfindungsgemäße Verfahren notwendige Sensorgrößen selber erfasst. In diesem Fall sei beispielsweise auf ein eingangs erwähntes Smartphone 20 als e\rfindungsgemäße Vorrichtung verwiesen, welches bereits Beschleunigungssensoren 120, Winkelsensoren 130 und/oder Drehratensensoren 140 aufweist. In dem zugeordneten Speicher 110 können sowohl die erfassten Sensorgrößen als auch die abgeleiteten Größen wie beispielsweise die Integrationsgrößen oder die Energiegröße und die Kippgröße abgespeichert werden. Darüber hinaus können in dem Speicher 110 die entsprechenden Schwellenwerte hinterlegt sein.

Mittels wenigstens eines ersten Sensors 120 erfasst die Auswerteinheit 100 eine Beschleunigungsgröße, die die Bewegung des Zweirads repräsentiert. Hierbei ist insbesondere vorteilhaft, wenn der eine erste Sensor 120 die Beschleunigung in wenigstens beiden Richtungen x und y der Bewegungsebene in Form von jeweils ersten und zweiten Sensorgrößen erfasst. Alternativ kann auch vorgesehen sein, dass für beiden Bewegungsrichtungen jeweils ein eigener Beschleunigungssensor entsprechenden erste und zweite Sensorgrößen erfasst.

In weiteren Ausführungsbeispielen können weitere Sensoren vorgesehen sein, die die Klassifikation des Unfallvorgangs ermöglichen oder die Klassifikation plausibilisieren. Hierzu kann beispielsweise ein Winkelsensor 130 vorgesehen sein, der Sensorgrößen für den Rollwinkel und den Nickwinkel des Zweirads erfasst.

Auch hierbei kann alternativ vorgesehen sein, dass zwei Winkelsensoren vorgesehen sind, die unabhängig voneinander Sensorgrößen für den Rollwinkel und den Nickwinkel erfassen. Zusätzlich zum Winkelsensor 130 oder alternativ kann auch vorgesehen sein, dass die Auswerteinheit 100 die Sensorgrößen eines Drehratensensors 140 erfasst. Für die Klassifikation des Unfallvorgangs ist dabei besonders eine erste Drehrate $\omega_x$ um die Längsachse x oder die Fahrtrichtung des Zweirads sowie eine zweite Drehrate $\omega_y$ um die y-Richtung quer zur Langsachse x interessant. Wie schon beim Beschleunigungssensor 120 oder dem Winkelsensor 130 kann auch beim Drehratensensor 140 vorgesehen sein, dass separate Drehratensensoren 140x die erste und die zweite Drehrate $\omega_x$ bzw. $\omega_y$ erfassen.

Wird durch das Verfahren erkannt, dass der Unfallvorgang mit einer Kollision verbunden ist oder einem Personenschaden, erzeugt die Auswerteeinheit 100 eine Information, um diesen Zustand anzuzeigen. Hierzu kann im einfachsten Fall der Fahrer über eine entsprechende optische oder akustische Anzeige 160 informiert werden. Es ist jedoch auch möglich, dass diese Information an einen externen Empfänger 150 gesendet wird, um Hilfe herbei zu rufen. Dabei kann es sich sowohl um eine zentrale Leitstelle, eine vorausgewählte Ansprechperson oder allgemein Hilfsdienste handeln. Optional kann vorgesehen sein, dass weitere Einheiten 170 in der Vorrichtung 100 oder am Zweirad angesteuert werden, falls eine Kollision erkannt wird. So kann beispielsweise vorgesehen sein, die Antriebeinheit abgeschaltet werden, eine Energiequelle Stromlos geschalten werden oder ein vorbereitetes Notsignal abgesendet werden.

Ähnliche Informationen können auch abgegeben werden, falls das Verfahren lediglich einen ungefährlichen Sturz erkennt. So kann vorgesehen sein, dass die Information über die Schwere des Sturzes weitergegeben wird, um den Hilfsdiensten im Vorfeld Unterstützung zu geben. Auch der Grad der Eingriffe in die Komponenten und Einrichtungen 170 des Zweirads kann hierdurch gesteuert werden.

Ein möglicher Ablauf des erfindungsgemäßen Verfahrens soll im nachfolgenden anhand des Flussdiagramms der Figur 3 beschrieben werden. Durch dieses Verfahren beziehungsweise mit dem damit verbundenen Algorithmus kann eine insbesondere frontale oder seitliche Kollision des Zweirads mit einem anderen Fahrzeug, einer Person oder einem Tier sowie einem Gegenstand von einem insbesondere seitlichen Umfallen unterschieden werden. Hierdurch kann eine Klassifizierung sowohl der Unfallschwere durchgeführt werden als auch eine Abschätzung des Unfallhergangs oder deren Verlauf. Sowohl die Klassifizierung als auch die Abschätzung des Unfallhergangs kann direkt oder durch die Verwendung weiterer Verfahren für die Einleitung von Hilfemaßnahmen verwendet werden.

Nach dem Start des Verfahrens werden in einem ersten Schritt 300 zumindest Beschleunigungsgrö-

ßen $a_x$ und $a_y$ erfasst, die die Beschleunigung des Zweirads in x- und y-Richtung repräsentieren. Bei diesen beiden Richtungen handelt es sich im Wesentlichen um die Bewegungsrichtung oder Längsrichtung x des Zweirads sowie um eine zu dieser x-Richtung in der typischen Bewegungsebene des Zweirads befindliche orthogonal stehende y-Richtung. Der hierzu erforderliche Beschleunigungssensor kann dabei fest mit dem Zweirad verbaut sein oder Teil einer Anzeige- und Steuervorrichtung sein, die vom Fahrer temporär an dem Fahrrad befestigbar ist oder vom Fahrer zur Erfassung der Bewegung während der Fahrt mitgeführt wird. Denkbar ist beispielsweise zur Erfassung dieser und weiterer Sensorgrößen die Sensoren in einem mobilen Endgerät, wie beispielsweise einem Smartphone, oder einer Mensch-Maschine-Schnittstelle (engl. Human Machine Interface - HMI), die beispielsweise zur Steuerung des Antriebs eines Elektrofahrzeugs genutzt wird, zu verwenden.

Optional können in dem Schritt 300 zusätzliche Sensorgrößen erfasst werden, die für weitere Ausführungsbeispiele verwendet werden können. So können beispielsweise Drehratensensorgrößen $\omega_x$ und $\omega_y$ erfasst werden, die die Drehrate um die x- beziehungsweise y-Richtung repräsentieren und somit die (seitliche) Verkippung des Zweirads oder das Überschlagen des Zweirads nach vorne über den Lenker erfassen. Zusätzlich oder alternativ können auch der Rollwinkel $\varphi$ und/oder der Nickwinkel $\theta$ mittels eines geeigneten Sensors erfasst werden. Statt der eigenständigen Erfassung des Rollwinkels und des Nickwinkels kann auch eine Ableitung aus den entsprechenden Drehratensensorgrößen erfolgen.

Die Erfassung der für das Verfahren erforderlichen Sensorgrößen kann optional auch in einem separaten Verfahren durchgeführt werden, so dass dem erfindungsgemäßen Verfahren ständig aktuelle Sensorgrößen zur Verfügung stehen.

Falls die Erfassung der Sensorgrößen, wie beispielsweise der Beschleunigungssensorgrößen, durch ein abnehmbares mobiles Endgerät erfolgt, kann es notwendig sein, die Ausrichtung der Sensorgrößen zu kalibrieren, da die im mobilen Endgerät definierten Raumrichtungen aufgrund der Anbringung und Ausrichtung bei der Befestigung nicht mit der Bewegungsrichtung übereinstimmen. Hierzu bietet sich beispielsweise eine Kalibrierung mittels einer Eulerwinkelabschätzung an. Optional kann auch vorgesehen sein, dass bei der erfassten Beschleunigungsgrößen der Erdbeschleunigungsanteil kompensiert wird.

Im nächsten Schritt 310 werden die erfassten Beschleunigungssensorgrößen gemäß

$$\Delta v_x = \int a_x \, dt$$

$$\Delta v_y = \int a_y \, dt$$

entsprechend integriert, um die Geschwindigkeitsänderung sowohl in der x- als auch der y-Richtung zu erkennen. Zur Erkennung einer Kollision reicht dabei die Betrachtung der beiden Raumrichtungen, in denen hauptsächlich die Bewegung des Zweirads vorgesehen ist. Die Bewegung in Richtung der z-Achse weist dabei im Wesentlichen Ereignisse auf, die durch Bodenunebenheiten oder durch Anstiege beziehungsweise Abfahrten hervorgerufen werden. Die Integrationsgrenzen werden vorteilhafterweise in Abhängigkeit der zeitlichen Aufnahme der Sensorgrößen gewählt. So könnte bei einer Abtastrate von 100 Hz ausreichen, jeweils 5 bis 10 Sensorgrößen zu integrieren, so dass eine Integrationszeit von 50 bis 100 ms vorgesehen sein kann. Eine derartige Zeitdauer ist darüber hinaus ausreichend, um eine Kollision von einem (seitlichen) Umfallen ("Ground Hit") zu unterscheiden.

Im Schritt 330 wird anschließend aufgrund der Geschwindigkeitsänderung $\Delta vx$ beziehungsweise $\Delta vy$ erkannt, in welcher Raumrichtung die Hauptänderung der Geschwindigkeit aufgetreten ist. Wird dabei erkannt, dass die Geschwindigkeitsänderung im Wesentlichen in der y-Richtung stattgefunden hat, die Geschwindigkeitsänderung $\Delta vy$ in y-Richtung einen Schwellenwert $SW_y$ überschritten hat oder dass die Änderung in y-Richtung überwiegt, insbesondere um ein Vielfaches, wird auf ein (seitliches) Umkippen des Zweirads erkannt, so dass im Schritt 350 der Fahrer informiert werden kann oder generell eine Information erzeugt werden kann, dass das Zweirad umgefallen ist.

Optional könnte über die Wahl der entsprechenden Schwellwerte von $SW_x$ und $SW_y$ eine Unterscheidung getroffen werden, ob eine Kollision von vorne (oder von hinten) oder eine seitliche Kollision stattgefunden hat. So könnte bei einem sehr großen Wert von $\Delta vy$ eine seitliche Kollision erkannt werden, da bei einer seitlichen Kollision eine höhere Geschwindigkeitsänderung zu erwarten ist als durch eine seitliches Umfallen des Zweirads. Erkennt das System jedoch, dass die Geschwindigkeitsänderung $\Delta vy$ sehr klein ist, beispielsweise durch Vergleich eines weiteren, kleineren Schwellenwerts $SW_y$, kann erkannt werden, dass weder eine Kollision noch ein Aufschlag auf den Boden vorliegt.

Wird im Schritt 330 erkannt, dass eine frontale oder seitliche Kollision stattgefunden hat, beispielsweise indem x-Richtung eine höhere Geschwindigkeitsänderung $\Delta vx$ als in y-Richtung erfasst worden ist, erkennt das Verfahren eine Kollision (in Längsrichtung oder seitlich). Hierbei kann zusätzlich das Überschreiten eines entsprechenden Schwellenwerts $SW_x$ vorgesehen sein, um die Kollision noch zu plausibilisieren. Dabei können auch verschiedene Schwellenwerte $SW_{x,n}$ verwendet werden, um eine Klassifizierung der Schwere der Kollision vornehmen zu können.

Nach der erkannten Kollision in Schritt 330 kann in einem weiteren Schritt 380 eine Information bezüglich der Kollision erzeugt werden, die beispielsweise an Dritte weitergeleitet wird. So kann ein mitgeführtes mobiles Endgerät verwendet werden, um über Funk Hilfe herbeizurufen oder auch nur um eine voreingestellte Person zu informieren. Über eine vorgenommene Klassifikation der Schwere der Kollision können zudem noch weitere Informationen weitergeleitet werden, die die Versorgung des bei der Kollision verunglückten Fahrers erleichtert. Das verwendete mobile Endgerät kann zudem das gleiche Gerät sein, durch das auch die erforderlichen Sensorgrößen erfasst worden sind.

Nach der Erkennung des Umfalles oder einer Kollision kann das Verfahren beendet oder erneut beginnend mit Schritt 300 durchlaufen werden.

In einem weiteren Ausführungsbeispiel kann nach der Erkennung einer Kollision des Zweirads in einem optionalen Schritt 390 wenigstens eine Komponente des Zweirads angesteuert werden, um weiteren Schaden des Fahrers und/oder des Zweirads zu vermeiden. Hierbei kann beispielsweise der Antrieb eines Elektrofahrrads abgestellt werden. Es ist jedoch auch denkbar, dass eine optische und/oder akustische Warneinrichtung angesteuert wird, um andere Verkehrsteilnehmer zu informieren und/oder zur Hilfe zu rufen. Entsprechend kann auch bei der Erkennung des Umfallens des Zweirads in einem optionalen Schritt 360 eine ähnliche Ansteuerung von Komponenten des Zweirads vorgesehen sein. Hierbei könnte beispielsweise der Fahrer auf das Umkippen hingewiesen werden, wenn er das Zweirad abgestellt hat und sich nicht in der Nähe befindet.

Wie bereits eingangs ausgeführt, besteht die Möglichkeit, weitere Sensorgrößen zu erfassen, um die Erkennung einer Kollision zu plausibilisieren und/oder die Unterscheidung zum reinen Umfallen des Zweirads zu verbessern. So kann im Schritt 310 aus dem erfassten Rollwinkel $\varphi$ und Nickwinkel $\theta$ gemäß

$$\gamma = \sqrt{\theta^2 + \varphi^2}$$

eine Kippgröße $\gamma$ abgeleitet werden, die die Orientierung des Zweirads repräsentiert. Diese Kippgröße $\gamma$ kann zusammen mit einer abgeschätzten Energiegröße $E_{kin}$ gemäß

$$E_{kin,xy} = \Delta v_x^2 + \Delta v_y^2$$

in Abhängigkeit der Geschwindigkeitsänderung $\Delta v_x$ und $\Delta v_y$ im Schritt 330 verwendet werden, um die Erkennung einer Kollision mit Hilfe der Kippgröße $\gamma$ zu plausibilisieren. Hierbei wird angenommen, dass bei einer hohen Kippgröße $\gamma$ (Vergleich mit einem Kippschwellenwert $SW_K$) und einer nachfolgenden hohen Energiegröße $E_{kin}$ (Vergleich mit einem Energieschwellenwert $SW_E$) eine Kollision des Zweirads vorliegt. Dagegen wird ein Umfallen oder Umkippen des Zweirads, insbesondere das seitliche Umfallen, erkannt, wenn die Kippgröße $\gamma$ unterhalb des Kippschwellenwert $SW_K$ und die Energiegröße $E_{kin}$ unterhalb des Energieschwellenwert $SW_E$ liegt. Der Fall, dass ein Schwellenwert durch den entsprechenden Wert überschritten und der andere Wert den entsprechenden Schwellenwert nicht übersteigt müsste mit weiteren Sensorgrößen plausibilisiert werden, um eine Kollision oder ein Umfallen des Zweirads zu erkennen. Derartige und weitere Plausibilisierungen könnten ebenfalls im Schritt 330 durchgeführt werden.

Alternativ kann im Schritt 330 auch eine Kollision von der Seite erkannt werden. Hierzu wird zunächst ein (seitliches) Umfallen beziehungsweise Kippen über einen großen Rollwinkel $\varphi$ erkannt, z.B. durch einen Vergleich mit einem Schwellenwert $SW_\varphi$, gegebenenfalls in Verbindung mit einer erhöhten Geschwindigkeitsänderung in y-Richtung. Wird jedoch ein kleiner Rollwinkel $\varphi$ erkannt, bei dem gleichzeitig eine hohe kinetische Energie $E_{kin,y}$ in y-Richtung vorliegt (beispielsweise über einen Vergleich mit einem Schwellenwert $SW_{Ekin,y}$) wird statt dem einfachen seitlichen Umfallen eine seitliche Kollision erkannt.

Eine weitere Ausführung in Schritt 330 kann beinhalten, dass ein zeitlicher Bezug zwischen den einzelnen erfassten Winkel oder dem Überschreiten eines oder mehrerer Schwellenwerte vorhanden sein muss, um eine frontale oder seitliche Kollision oder ein Umfallen des Zweirads zu erkennen. So kann eine frontale Kollision erkannt werden, wenn zunächst ein ausgeprägter Nickwinkel und anschließend in einem kurzen Zeitraum danach ein Rollwinkel erkannt wird. Dies würde darauf hinweisen, dass das Zweirad auf ein Hindernis auffährt und anschließend der Fahrer mit dem Zweirad zur Seite kippt. Entsprechend können auch die Verzögerungen in Längsrichtung x und Querrichtung y zeitlich nacheinander auf eine frontale Kollision hinweisen.

Zusätzlich können optional auch jeweils nach der Erkennung im Schritt 330 Plausibilisierungen durchgeführt werden, um die Erkennung im Schritt 330 zu verifizieren. Hierbei kann in einem gesonderten nachgelagerten Schritt 340 die Erkennung eines Umfallen und in einem Schritt 370 (die Erkennung einer Kollision überprüft werden. Hierzu können weitere Sensorgrößen oder deren zeitliche Veränderung verwendet werden. So könnte beispielsweise innerhalb einer kurzen Zeit nach der Erkennung einer Kollision erkannt werden, ob sich das Zweirad mit erklärbarer Geschwindigkeit in Längsrichtung weiter bewegt, um eine Kollision als unwahrscheinlich zu charakterisieren. In diesem Fall könnte das Verfahren beendet oder erneut mit dem Schritt 300 durchlaufen werden. Ähnlich könnte ein Aufrichten des Zweirads durch den Fahrer im Schritt 340 oder auch die Erkennung einer 180° Drehung für eine Wartungssituation das Umkippen des Zweirads erklären. In letzterem Fall wäre die Arretierung bzw. die Deaktivierung des Antriebs im Schritt 360 zum Wechsel der Kette hilfreich. Wird jedoch im Schritt 340 erkannt, dass keine Umkippsituation vorliegt, kann das Verfahren beendet werden oder in die Lage versetzt werden, mit dem Schritt 300 neue Sensorgrößen für eine Neubewertung zu erfassen.

In einem weiteren Ausführungsbeispiel kann vor der Klassifizierung beziehungsweise Erkennung der Kollision beziehungsweise der Umfallsituation im Schritt 330 ein vorgelagerter Schritt 320 erfolgen, in dem die verwendeten Schwellenwerte, z.B. $SW_K$, $SW_E$, $SW_x$ oder $SW_y$, aufgrund von betrieblichen Größen des Zweirads und/oder in Abhängigkeit von Fahrparametern oder Umgebungsparametern festgelegt werden, z.B. in Abhängigkeit der Varianz der erfassten Drehratengröße in x- und/oder y-Richtung. Es ist auch denkbar, dass mehrere Schwellenwerte für eine Sensorgröße oder einem ermittelten beziehungsweise erzeugten Wert festgelegt werden, beispielsweise um die Schwere der Kollision zu klassifizieren. Optional kann so vorgesehen sein, wenigstens einen der Energieschwellenwerte $E_{kin,x}$ beziehungsweise $E_{kin,y}$ variabel zu gestalten. So ist denkbar, den entsprechenden Energieschwellenwert mit der Kippgröße und/oder den absoluten Roll- oder Nickwinkeln ansteigen oder abfallen zu lassen. So kann ein Energieschwellenwert zur Erkennung einer Kollision derart gewählt werden, dass dieser bei kleinen Werten der Kippgröße, des Rollwinkels und/oder des Nickwinkels niedrig gewählt wird, wobei bei einem Ansteigen der Kippgröße, des Rollwinkels und/oder des Nickwinkels ebenfalls einer Erhöhung des Energieschwellenwerts vorgenommen wird, z.B. exponentiell oder quadratisch. Übersteigt die erfassten oder errechnete Energie dabei den Energieschwellenwert, wird auf eine Kollision erkannt. Alternativ oder zusätzlich kann ein Energieschwellenwert verwendet werden, der zur Erkennung eines Aufpralls auf den Boden dient. Hierbei kann zunächst bei niedrigen Werten der Kippgröße, des Rollwinkels und/oder des Nickwinkels ein hoher Energieschwellenwert vorgesehen sein, der mit zunehmender Kippgröße, des Rollwinkels und/oder des Nickwinkels reduziert wird, z.B. in exponentieller oder quadratischer Abhängigkeit. Hierbei kann bei einer Überschreitung des Energieschwellenwerts einen Aufprall erkannt werden.

Auch die Verwendung von Wahrscheinlichkeitsmodellen anstelle von Schwellenwerte oder bei der Ableitung der Schwellenwerte ist denkbar. Hierbei kann beispielsweise auf interne oder externe Datenbanken oder auf die einzelnen erfassten Sensorgrößen oder den abgeleiteten Werten zurück gegriffen werden. So ist denkbar, dass die Auswerteinheit 100 im Speicher 110 entsprechende Datenbanken vorliegen hat oder mittels einer insbesondere drahtlosen Funkverbindung auf eine derartige Datenbank zugreifen kann.

Im Schritt 330 kann die Erkennung beziehungsweise die Klassifikation auch direkt von dem einzeln erfassten Rollwinkel $\varphi$, dem Nickwinkel $\theta$, der Drehratengrößen, insbesondere deren Varianz, und/oder der gerichteten Energiegrößen $E_{kin,x}$ beziehungsweise $E_{kin,y}$ erfolgen. Hierzu können entsprechend zugeordnete Schwellenwerte vorgesehen sein.

## Patentansprüche

1. Verfahren zur Klassifizierung eines Unfallvorgangs eines Zweirads, insbesondere eines Fahrrads, wobei das Verfahren wenigstens

   • erste und eine zweite Sensorgrößen ($a_x$, $a_y$) erfasst, die die Beschleunigung des Zweirads (10) in zwei Richtungen in der Bewegungsebene des Zweirads (10) repräsentieren, und
   • eine erste Integrationsgröße ($v_x$) in Abhängigkeit einer zeitlichen Integration der ersten Sensorgröße ($a_x$) erzeugt, und
   • eine zweite Integrationsgröße ($v_y$) in Abhängigkeit einer zeitlichen Integration der zweiten Sensorgröße ($a_y$) erzeugt, und
   eine Klassifikation des Unfallvorgangs in Abhängigkeit der ersten und zweiten Integrationsgröße ($v_x$, $v_y$) durchführt, daduch gekennzeichnet, dass das Verfahren

   • einen Rollwinkel ($\varphi$) erfasst, der die Drehung des Zweirads um die Längsachse repräsentiert, und
   • einen Nickwinkel ($\theta$) erfasst, der die Drehung des Zweirads um die Querachse repräsentiert, und
   • die Klassifikation des Unfallvorgangs zusätzlich in Abhängigkeit des Rollwinkels und Nickwinkels durchführt, und/oder das Verfahren
   • eine erste Drehrate ($\omega_x$) erfasst, der die Drehung des Zweirads um die Längsachse (x) repräsentiert, und
   • eine zweite Drehrate ($\omega_y$) erfasst, der die Drehung des Zweirads um die Querachse (y) repräsentiert, und

   die Klassifikation des Unfallvorgangs zusätzlich in Abhängigkeit der ersten und zweiten Drehrate ($\omega_x$, $\omega_y$) durchführt.

2. Verfahren nach Anspruch 1, **dadurch gekennzeichnet, dass** das Verfahren die Klassifikation durch einen Vergleich

   • der ersten und/oder zweiten Integrationsgröße ($v_x$, $v_y$) mit wenigstens einem zugeordneten Schwellenwert ($SW_x$, $SW_y$), und/oder
   • der ersten mit der zweiten Integrationsgröße ($v_x$, $v_y$) durchführt.

3. Verfahren nach einem der vorhergehenden Ansprüche, **dadurch gekennzeichnet, dass** das Verfahren

   • als erste Sensorgröße ($a_x$) eine Beschleunigungsgröße erfasst, die eine Beschleunigung des Zweirads in Längsrichtung (x) repräsentiert und
• als zweite Sensorgröße ($a_y$) eine Beschleunigungsgröße erfasst, die eine Beschleunigung des Zweirads in Querrichtung (y) zur Längsrichtung (x) repräsentiert.

4. Verfahren nach Anspruch 3, **dadurch gekennzeichnet, dass** das Verfahren bei der Klassifikation eine Information erzeugt, die eine Kollision des Zweirads repräsentiert, wenn

• die erste Integrationsgröße ($v_x$) einen ersten Schwellenwert ($SW_1$) übersteigt und/oder die
• erste Integrationsgröße ($v_x$) die zweite Integrationsgröße ($v_y$) überschreitet, insbesondere um ein Vielfaches.

5. Verfahren nach Anspruch 3 oder 4, **dadurch gekennzeichnet, dass** das Verfahren bei der Klassifikation eine Information erzeugt, die ein, insbesondere seitliches, Umfallen des Zweirads repräsentiert, wenn

• die zweite Integrationsgröße ($v_y$) einen zweiten Schwellenwert ($SW_2$) übersteigt und/oder die
• zweite Integrationsgröße ($v_y$) die erste Integrationsgröße ($v_x$) überschreitet, insbesondere um ein Vielfaches.

6. Verfahren nach einem der vorhergehenden Ansprüche, **dadurch gekennzeichnet, dass** vorgesehen ist, dass die Klassifikation eine Überschreitung des entsprechenden Schwellenwerts ($SW_\varphi$, $SW_\theta$) durch den Rollwinkel und/oder den Nickwinkel berücksichtigt, wobei insbesondere eine Überschreitung der Schwellenwerte in einem vorbestimmten zeitlichen Abstand berücksichtigt wird.

7. Verfahren nach Anspruch 6, **dadurch gekennzeichnet, dass** das Verfahren

• eine Energiegröße (E) in Abhängigkeit der ersten und zweiten Integrationsgröße erzeugt, und
• eine Kippgröße (y) in Abhängigkeit des Rollwinkels und des Nickwinkel erzeugt, und
• die Klassifikation des Unfallvorgangs zusätzlich in Abhängigkeit der Energiegröße ($E_{kin}$) und des Kippgröße (y) durchführt, wobei das Verfahren
• eine Information erzeugt, die eine Kollision des Zweirads repräsentiert, wenn die Energiegröße einen Energieschwellenwert ($SW_E$) übersteigt und die Kippgröße (y) einen Kippschwellenwert ($SW_K$) übersteigt, oder
• eine Information erzeugt, die ein, insbesondere seitliches, Umfallen des Zweirads repräsentiert, wenn die Energiegröße ($E_{kin}$) den Energieschwellenwert ($SW_E$) nicht übersteigt und die Kippgröße (γ) den Kippschwellenwert ($SW_K$) nicht übersteigt.

8. Verfahren nach einem der vorhergehenden Ansprüche, **dadurch gekennzeichnet, dass** vorgesehen ist, dass das Verfahren

• eine Information erzeugt, die ein, insbesondere seitliches, Umfallen des Zweirads repräsentiert, wenn die erste Drehrate ($\omega_x$) einen ersten Drehratenschwellenwert ($SW\omega_x$) übersteigt, oder
• eine Information erzeugt, die eine Kollision des Zweirads repräsentiert, wenn zweite Drehrate ($\omega_y$) einen zweiten Drehratenschwellenwert ($SW\omega x$) übersteigt.

9. Vorrichtung zur Klassifizierung eines Unfallvorgangs eines Zweirads, insbesondere eines Fahrrads, wobei die Vorrichtung eine Auswerteeinheit (100) aufweist, die ein Verfahren nach einem der Ansprüche 1 bis 8 ausführt, wobei die Auswerteeinheit (100) wenigstens

• erste und eine zweite Sensorgrößen erfasst, die die Beschleunigung des Zweirads (10) in zwei Richtungen in der Bewegungsebene des Zweirads (10) repräsentieren, und
• eine erste Integrationsgröße in Abhängigkeit einer zeitlichen Integration der ersten Sensorgröße erzeugt, und
• eine zweite Integrationsgröße in Abhängigkeit einer zeitlichen Integration der zweiten Sensorgröße erzeugt, und
• eine Klassifikation des Unfallvorgangs in Abhängigkeit der ersten und zweiten Integrationsgröße durchführt, insbesondere durch Ausgabe einer Information, die eine Kollision oder ein, insbesondere seitliches, Umfallen des Zweirads repräsentiert.

10. Zweirad, insbesondere ein Fahrrad (10), mit einer Vorrichtung nach Anspruch 9.

**Claims**

1. Method for classifying an accident event involving a two-wheeled vehicle, in particular a bicycle, wherein the method at least

• detects first and second sensor variables ($a_x$, $a_y$) that represent the acceleration of the two-wheeled vehicle (10) in two directions in the plane of movement of the two-wheeled vehicle (10), and
• generates a first integration variable ($v_x$) as a function of an integration of the first sensor variable ($a_x$) with respect to time, and
• generates a second integration variable ($v_y$) as a function of an integration of the second sensor variable ($a_y$) with respect to time, and
carries out a classification of the accident event as a function of the first and the second integration variable ($v_x$, $v_y$), **characterized in that** the method

  • detects a roll angle ($\varphi$) that represents the rotation of the two-wheeled vehicle about the longitudinal axis, and
  • detects a pitch angle ($\theta$) that represents the rotation of the two-wheeled vehicle about the transverse axis, and
  • carries out the classification of the accident event additionally as a function of the roll angle and the pitch angle, and/or the method
  • detects a first rate of rotation ($\omega_x$) that represents the rotation of the two-wheeled vehicle about the longitudinal axis (x), and
  • detects a second rate of rotation ($\omega_y$) that represents the rotation of the two-wheeled vehicle about the transverse axis (y), and

carries out the classification of the accident event additionally as a function of the first and the second rate of rotation ($\omega_x$, $\omega_y$).

2.  Method according to Claim 1, **characterized in that** the method carries out the classification by comparing

  • the first and/or the second integration variable ($v_x$, $v_y$) with at least one associated threshold value ($SW_x$, $SW_y$), and/or
  • the first integration variable ($v_x$) with the second integration variable ($v_y$) •

3.  Method according to either of the preceding claims, **characterized in that** the method

  • detects, as the first sensor variable ($a_x$), an acceleration variable that represents an acceleration of the two-wheeled vehicle in the longitudinal direction (x), and
  • detects, as the second sensor variable ($a_y$), an acceleration variable that represents an acceleration of the two-wheeled vehicle in the transverse direction (y) in relation to the longitudinal direction (x).

4.  Method according to Claim 3, **characterized in that** the method, during the classification, generates an item of information that represents a collision of the two-wheeled vehicle if

  • the first integration variable ($v_x$) exceeds a first threshold value ($SW_1$) and/or
  • the first integration variable ($v_x$) overshoots the second integration variable ($v_y$), in particular by a multiple.

5.  Method according to Claim 3 or 4, **characterized in that** the method, during the classification, generates an item of information that represents a situation of the two-wheeled vehicle falling over, in particular laterally, if

  • the second integration variable ($v_y$) exceeds a second threshold value ($SW_2$) and/or
  • the second integration variable ($v_y$) overshoots the first integration variable ($v_x$), in particular by a multiple.

6.  Method according to one the preceding claims, **characterized in that** provision is made for the classification to take into account overshooting of the corresponding threshold value ($SW\varphi$, $SW\theta$) by the roll angle and/or the pitch angle, wherein in particular overshooting of the threshold values is taken into account in a predetermined time interval.

7.  Method according to Claim 6, **characterized in that** the method

  • generates an energy variable (E) as a function of the first and the second integration variable, and
  • generates a tilting variable ($\gamma$) as a function of the roll angle and the pitch angle, and
  • carries out the classification of the accident event additionally as a function of the energy variable ($E_{kin}$) and the tilting variable (y), wherein the method
  • generates an item of information that represents a collision of the two-wheeled vehicle if the energy variable exceeds an energy threshold value ($SW_E$) and the tilting variable ($\gamma$) exceeds a tilting threshold value ($SW_K$), or
  • generates an item of information that represents a situation of the two-wheeled vehicle falling over, in particular laterally, if the energy variable ($E_{kin}$) does not exceed the energy threshold value ($SW_E$) and the tilting variable ($\gamma$) does not exceed the tilting threshold value ($SW_K$).

8.  Method according to one of the preceding claims, **characterized in that** provision is made for the method

• to generate an item of information that represents a situation of the two-wheeled vehicle falling over, in particular laterally, if the first rate of rotation ($\omega_X$) exceeds a first rate-of-rotation threshold value ($SW\omega_x$), or
• to generate an item of information that represents a collision of the two-wheeled vehicle if the second rate of rotation ($\omega_Y$) exceeds a second rate-of-rotation threshold value ($SW\omega x$).

9. Apparatus for classifying an accident event involving a two-wheeled vehicle, in particular a bicycle, wherein the apparatus has an evaluation unit (100) which executes a method according to one of Claims 1 to 8, wherein the evaluation unit (100) at least

• detects first and second sensor variables that represent the acceleration of the two-wheeled vehicle (10) in two directions in the plane of movement of the two-wheeled vehicle (10), and
• generates a first integration variable as a function of an integration of the first sensor variable with respect to time, and
• generates a second integration variable as a function of an integration of the second sensor variable with respect to time, and
• carries out a classification of the accident event as a function of the first and the second integration variable, in particular by outputting an item of information that represents a collision or a situation of the two-wheeled vehicle falling over, in particular laterally.

10. Two-wheeled vehicle, in particular a bicycle (10), comprising an apparatus according to Claim 9.

## Revendications

1. Procédé permettant de classifier un déroulement d'accident d'un deux-roues, en particulier d'une bicyclette, dans lequel le procédé, au moins,

• détecte une première et une deuxième grandeur de capteur ($a_x$, $a_y$), lesquelles représentent l'accélération du deux-roues (10) dans deux directions dans le plan de mouvement du deux-roues (10), et
• génère une première grandeur d'intégration ($v_x$) en fonction d'une intégration temporelle de la première grandeur de capteur ($a_x$), et
• génère une deuxième grandeur d'intégration ($v_y$) en fonction d'une intégration temporelle de la deuxième grandeur de capteur ($a_y$), et
effectue une classification du déroulement d'accident en fonction des première et deuxième grandeurs d'intégration ($v_x$, $v_y$), **caractérisé en ce que** le procédé

• détecte un angle de roulis ($\varphi$) qui représente la rotation du deux-roues autour de l'axe longitudinal, et
• détecte un angle de tangage ($\theta$) qui représente la rotation du deux-roues autour de l'axe transversal, et
• effectue en outre la classification du déroulement d'accident en fonction de l'angle de roulis et de l'angle de tangage, et/ou **en ce que** le procédé
• détecte une première vitesse de rotation ($\omega_X$) qui représente la rotation du deux-roues autour de l'axe longitudinal (x), et
• détecte une deuxième vitesse de rotation ($\omega_y$) qui représente la rotation du deux-roues autour de l'axe transversal (y), et

effectue en outre la classification en fonction des première et deuxième vitesses de rotation ($\omega_X$, $\omega_y$).

2. Procédé selon la revendication 1, **caractérisé en ce que** le procédé effectue la classification par une comparaison

• de la première et/ou de la deuxième grandeur d'intégration ($v_x$, $v_y$) avec au moins une valeur de seuil associée ($SW_x$, $SW_y$), et/ou
• de la première avec la deuxième grandeur d'intégration ($v_x$, $v_y$).

3. Procédé selon l'une quelconque des revendications précédentes, **caractérisé en ce que** le procédé

• détecte, en tant que première grandeur de capteur ($a_x$), une grandeur d'accélération qui représente une accélération du deux-roues dans la direction longitudinale (x), et
• détecte, en tant que deuxième grandeur de capteur ($a_y$), une grandeur d'accélération qui représente une accélération du deux-roues dans la direction transversale (y) par rapport à la direction longitudinale (x).

4. Procédé selon la revendication 3, **caractérisé en ce que** le procédé génère, lors de la classification, une information représentant une collision du deux-roues, lorsque

• la première grandeur d'intégration ($v_x$) dépasse une première valeur de seuil ($SW_1$) et/ou lorsque
• la première grandeur d'intégration ($v_x$) dépasse la deuxième grandeur d'intégration ($v_y$), en particulier d'un multiple de celle-ci.

5. Procédé selon la revendication 3 ou 4, **caractérisé en ce que** le procédé génère, lors de la classification, une information représentant une chute, en particulier latérale, du deux-roues, lorsque

- la deuxième grandeur d'intégration ($v_y$) dépasse une deuxième valeur de seuil ($SW_2$) et/ou lorsque
- la deuxième grandeur d'intégration ($v_y$) dépasse la première grandeur d'intégration ($v_x$), en particulier d'un multiple de celle-ci.

6. Procédé selon l'une quelconque des revendications précédentes, **caractérisé en ce qu'**il est prévu que la classification tienne compte d'un dépassement de la valeur de seuil correspondante ($SW_\varphi$, $SW_\theta$) par l'angle de roulis et/ou par l'angle de tangage, en particulier dans lequel un dépassement des valeurs de seuil est pris en compte à un intervalle de temps prédéterminé.

7. Procédé selon la revendication 6, **caractérisé en ce que** le procédé

- génère une grandeur d'énergie (E) en fonction des première et deuxième grandeurs d'intégration, et
- génère une grandeur de basculement ($\gamma$) en fonction de l'angle de roulis et de l'angle de tangage, et
- effectue en outre la classification du déroulement d'accident en fonction de la grandeur de l'énergie ($E_{kin}$) et de la grandeur de basculement (y),
dans lequel le procédé
- génère une information qui représente une collision du deux-roues lorsque la grandeur de l'énergie dépasse une valeur de seuil d'énergie ($SW_E$) et que la grandeur de basculement ($\gamma$) dépasse une valeur de seuil de basculement ($SW_K$), ou
- génère une information qui représente une chute, en particulier latérale, du deux-roues lorsque la grandeur d'énergie ($E_{kin}$) ne dépasse pas la valeur de seuil d'énergie ($SW_E$) et que la grandeur de basculement ($\gamma$) ne dépasse pas la valeur de de basculement ($SW_K$).

8. Procédé selon l'une quelconque des revendications précédentes, **caractérisé en ce que** le procédé

- génère une information qui représente une chute, en particulier latérale, du deux-roues lorsque la première vitesse de rotation ($\omega_X$) dépasse une première valeur de seuil de vitesse de rotation ($SW\omega_x$), oder
- génère une information qui représente une collision du deux-roues lorsque la deuxième vitesse de rotation ($\omega_Y$) dépasse une deuxième valeur de seuil de vitesse de rotation ($SW\omega x$).

9. Dispositif de classification d'un déroulement d'accident d'un deux-roues, en particulier d'une bicyclette, dans lequel le dispositif comporte une unité d'évaluation (100) qui met en œuvre un procédé selon l'une quelconque des revendications 1 à 8, dans lequel l'unité d'évaluation (100), au moins,

- détecte une première et une deuxième grandeur de capteur, lesquelles représentent l'accélération du deux-roues (10) dans deux directions dans le plan de mouvement du deux-roues (10), et
- génère une première grandeur d'intégration en fonction d'une intégration temporelle de la première grandeur de capteur, et
- génère une deuxième grandeur d'intégration en fonction d'une intégration temporelle de la deuxième grandeur de capteur, et
- effectue une classification du déroulement d'accident en fonction des première et deuxième grandeurs d'intégration, en particulier en délivrant une information représentant une collision ou une chute, en particulier latérale, du deux-roues.

10. Deux-roues, en particulier bicyclette (10), comprenant un dispositif selon la revendication 9.

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2632772 A1